# EUROPEAN PATENT APPLICATION

(11) **EP 2 003 150 A1**
(43) Date of publication of application: **17.12.2008**
(21) Application number: 07110183.6
(22) Date of filing: 13.06.2007
(51) Int. Cl.: C08F 210/06, C08F 297/08, C08L 23/12, C08F 2/00

(54) **A process for preparation of polyolefin alloy**

(71) Applicant: Petrochina Company Limited, Beijing 100011 (CN); Institute of Chemistry, Chinese Academy of Science, Beijing 100080 (CN)
(72) Inventor: DONG, Jinyong, 100080, BEIJING, Haidian District (CN); ZHU, Bochao, 100011, BEIJING, Dongcheng District (CN); HAN, Zhichao, 100080, BEIJING, Haidian District (CN); ZHANG, Changjun, 100011, BEIJING, Dongcheng District (CN); NIU, Hui, 100080, BEIJING, Haidian District (CN); WEI, Shaoyi, 100011, BEIJING, Dongcheng District (CN); LIU, Jiguang, 100080, BEIJING, Haidian District (CN); YAO, Peihong, 100011, BEIJING, Dongcheng District (CN); WANG, Hongying, 100080, BEIJING, Haidian District (CN); LI, Xiaojun, 100011, BEIJING, Dongcheng District (CN); WANG, Dujin, 100080, BEIJING, Haidian District (CN); ZHANG, Pingsheng, 100011, BEIJING, Dongcheng District (CN); ZHU, Yajie, 100011, BEIJING, Dongcheng District (CN); JIA, Junji, 100011, BEIJING, Dongcheng District (CN); HUANG, Chunbo, 100011, BEIJING, Dongcheng District (CN)
(74) Representative: Ahner, Francis

(57) **Abstract**

A process for polypropylene compositions having high impact strength at low temperatures is disclosed and catalyzed by Ziegler-Natta/metallocene hybrid catalysts by the in-situ polymerization of one or more olefins of the formula CH₂=CHR, in which R is hydrogen or an alkyl, cycloalkyl or aryl group having from 1 to 10 carbon atoms, comprising preparing an olefin polymer by Ziegler-Natta catalysts components of the titanium or vanadium/metallocene hybrid catalysts while the metallocene components are inactivated beforehand by inactivators; and polymerizing one or more olefins in the presence of the above olefin polymer, followed by a reactivation of the metallocene components.

## Description

### Field of the invention

The present invention relates to a process for preparation of polyolefin alloy, in particular, to a process for preparation of polypropylene alloy.

### Background of the invention

As is known, the isotactic polypropylene is endowed with an exceptional combination of excellent properties that are suitable for a very great number of uses, including appliances at high temperatures; however, it exhibits the drawback of insufficient impact strength at relatively low temperatures. Attempts were made to obviate such drawback, without remarkably affecting adversely, either by properly modifying the synthesis process or by blending with rubbers. The modifications to the synthesis process essentially consist in introducing one or more steps of copolymerization of olefins into the propylene stereoregular homopolymerization process, for example, ethylene-propylene mixtures. The impact strength properties at low temperatures of the isotactic polypropylene can also be improved by adding rubbers, in particular ethylene-propylene rubbers. According to U.S. Pat. No. 3,627,852, it is necessary to incorporate considerably high amounts of ethylene-propylene rubber in order to achieve a significant improvement. The function of the copolymer seems to be that of absorbing, at least partially, the impact energy in the area of graft and propagation of the fracture, with consequent improvement of the impact strength of the system. However, the impact strength properties of a polypropylene modified with an amorphous ethylene-propylene copolymer substantially depend on the amount and quality of the copolymer.

Multistage processes for the polymerization of olefins, carried out in two or more reactors, are known from the prior arts and are of particular interest in industrial practice. Via possibility of independently varying, in any reactors, process parameters such as temperature, pressure, type and concentration of monomers, concentration of hydrogen or other molecular weight regulator, much greater flexibility in controlling the composition and properties of the end product than single-stage processes is provided. Multistage processes are generally carried out using the same catalyst in the various stages/reactors: the product obtained in one reactor is discharged and sent directly to the next stage/reactor without altering the nature of the catalyst.

Multistage processes are used in the preparation of high-impact propylene copolymers by sequential polymerization of propylene and mixtures of propylene with ethylene. In a first stage, propylene is homopolymerized or copolymerized with smaller proportions of ethylene and/or olefins having 4-10 carbon atoms, obtaining a stereoregular polymer; in a second stage, mixtures of ethylene and propylene are polymerized in the presence of the polymer including the catalyst that is obtained in the first stage, obtaining polypropylene compositions having improved impact strength.

Processes of this type are described, for example, in U.S. Pat. No.4,521,566. In said patent, polypropylene compositions having high impact strength are prepared in a multistage process that comprises at least one stage of homopolymerization of propylene and at least one stage of polymerization of ethylene/propylene mixtures in the presence, in both stages, of a catalyst comprising a compound of titanium or vanadium supported on a magnesium halide in active form.

European Patent Application EP-A-433989 describes a process for preparing polypropylene composition containing 20 to 99% by weight of a crystalline (co)polymer, at least 95% by weight of propylene units, 1 to 80% by weight of a noncrystalline ethylene/propylene copolymer, and 20 to 90% by weight of ethylene units. The process is carried out in 2 stages: in liquid propylene in a first stage, the crystalline propylene (co)polymer is produced, and in hydrocarbon solvent in a second stage, the non-crystalline ethylene/propylene copolymer is produced. The same catalyst consisting of a chiral metallocene and an aluminoxane is used in both stages.

European Patent Application EP-A-433990 describes a process in two stages for the preparation of propylene-based polymer composition similar to those described in EP-A-433989, in which the crystalline propylene (co)polymer is produced in the first stage by polymerization in liquid propylene, and the noncrystalline ethylene/propylene copolymer is produced in the second stage by gas-phase polymerization. Also in this case, the same catalyst consisting of a chiral metallocene and an aluminoxane is used in both reactors.

German Patent Application DE 4130429 describes a multistage process for the production of block copolymers, accomplished entirely in the gas phase. In a first stage there is production of a matrix consisting of a homo or copolymer of propylene in an amount of between 45 and 95% by weight based on the total product; in a second stage, polymerization is carried out in the presence of the polypropylene matrix previously produced and of the catalyst used therein, an ethylene/α-olefin copolymer containing 0.1 to 79.9% by weight of ethylene units is prepared in an amount of between 5 and 55% by weight based on the total product. In both stages, polymerization is carried out in the gas phase by using the same metallocene catalyst.

The processes in the prior art have various limitations, one of which derives from the fact that the same catalyst is used in the different process stages and therefore the characteristics of the products obtained in the individual stages are not always optimum. For example, in the case of heterophase copolymers prepared in multistage processes using titanium catalysts, the properties of the rubbery copolymer produced in the second stage are poor. In fact, it is known that titanium catalysts produce ethylene/propylene copolymers containing relatively long sequences of the same monomer unit and consequently the elastomeric properties of the product are also poor.

Processes in several stages catalyzed by hybrid catalysts have a lot of applications, for example, in the preparation of olefin (co)polymers with broad molecular weight distribution (MWD), by producing polymer species with different molecular weight in the various reactors. The both molecular weight in each reactor and also the range of the MWD of the final product are generally controlled by using different concentrations of a molecular weight regulator which is preferably hydrogen.

U.S. Patent. No. 5,648,422 describes a multistage process for the production of olefin polymer compositions, working with different catalytic systems in the various stages. In the first stage, olefinic polymer is prepared in the presence of titanium catalysts or vanadium catalyst. Then a treatment stage in which the catalyst used previously is deactivated and a third stage in which a metallocene compound is supported on the olefin polymer produced in the first stage are carried out. Finally, a fourth stage of polymerization is accomplished in which one or more olefins are polymerized in the presence of the product obtained from the third stage. Although it combines the advantages of different catalysts, the complex processes make it difficult for industrial practice. Moreover, the metallocene compound could not be separated well in the porous polymer particles obtained in the first stage, and the superfluous metallocene catalyst on the polymer particle surface would tend to increase the tackiness of the solid polymeric phase, resulting in fouling of the reactor.

It has now been found a multistage process that is possible to produce a wide rang of olefin polymer compositions conveniently with different catalytic systems only in two or more stages. In particular, the process of the invention comprises a first stage, in which an olefin polymer is prepared selectively by Ziegler-Natta components of the Ziegler-Natta/metallocene hybrid catalysts, while the metallocene components are inactivated beforehand by inactivators, and a second stage in which one or more olefins are polymerized in the presence of the product obtained from the first stage, followed by a reactivation of the metallocene components by reactivators.

### Summary of the Invention

The object of the invention is to provide a process for preparation of polyolefins alloy.

Therefore the present invention relates to a process for preparation of polyolefins alloy comprising the steps of:
1) adding hybrid catalyst, one or more olefins monomers and an inactivator having a structure of CH₂=CH-B into a reactor, allowing a first polymerization reaction as a slurry polymerization in alkane solvent having from 5 to 10 carbon atoms or aromatic solvent or as a bulk polymerization directly in olefins monomers, wherein the temperature for the first polymerization reaction is in the range of from 0°C to 80 °C, wherein the inactivator is used in an amount of 0.1% to 20% based on the total weight of olefins monomers in the reactor, wherein B is selected from the group consisting of phenyl, biphenyl, naphthyl, anthracenyl and phenanthrenyl substituted with alkyl or alkoxyl or not;
2) adding olefins monomers until the completion of the first polymerization reaction, then adding olefin monomers and activators needed in a second polymerization reaction;
wherein the temperature for the second polymerization reaction is in the range of from 60 °C to 120°C, and,
wherein the olefins monomers used in the first polymerization reaction or the second polymerization reaction are selected from one or more of olefins having 2 to 12 carbon atoms, dienes, cyclic olefins and norbornene.

Preferably, olefins monomers used in the invention are olefins monomers having 3 to 12 carbon atoms. In examples of the invention, the used activator is ethylene. In another example of the invention, the olefin monomer is propylene. It is understood that olefins monomers can be olefins monomers having 3 to 12 carbon atoms, preferably propylene.

In other words, the activator used in process of the invention is ethylene. And the amount of ethylene as activator is more than 1% based on the total weight of the hybrid catalyst.

In a preferable embodiment, in the process for preparation of polyolefins alloy of the invention, the hybrid catalyst consisting mainly of Ziegler-Natta catalyzing component and metallocene catalyzing component based on weight percent of total catalyst, comprises:
A first compound having a transition metal M^{I} selected from titanium and vanadium without containing M^{I}-π bonds, wherein the transition metal M^{I} is in an amount of 0.1 % to 20%;
A second compound having a transition metal M selected from Ti, Zr, V or Hf containing at least one M-π bond, wherein the transition metal M is in an amount of 0.05% to 2%;
Magnesium halide, wherein the metal magnesium is in an amount of 5% to 20%;
Aluminoxane, wherein the metal Al is in an amount of 0.1% to 20%, and internal electron-donor in an amount of 1% to 30%.

Preferably, the first compound in the hybrid catalyst is halides of Ti, halo-alcoholates of Ti, VCl₃, VCl₄, VOCl₃ or halo-alcoholates of V, more preferably the halide of Ti is TiCl₄, TiCl₃ or halo-alcoholates of formula Ti(OR^{I})*ₘ*X*ₙ*, in which R^{I} represents a alkyl group or alkoxy with 1-12 carbon atoms, X represents a halogen, m, n=0~4, and m+n represents valency of the Ti, still preferably the Magnesium halide in the hybrid catalyst is MgCl₂.

In a preferable embodiment, the process for preparation of polyolefins alloy of the invention is characterized in that in the hybrid catalyst, aluminoxane is a linear or non-linear compound having 1 to 50 repeating units of -(R₄)AlO-, wherein R₄ represents alkyl or cycloalkyl having 1 to 12 carbon atoms, or aryl having 6 to 10 carbon atoms, preferably the aluminoxane is methyl aluminoxane.

In another preferable embodiment, the process for preparation of polyolefins alloy of the invention is characterized in that in the hybrid catalyst, the internal electron-donor is selected from the group consisting of mono-esters, di-esters or diethers, more particular the internal electron-donor is diethyl succinate, dibutyl adipate, diethyl phthalate, diisobutyl phthalate, 2,2-diisobutyl-1,3-dimethoxypropane and 9,9-bis(methoxymethyl) fluorine.

In a preferable embodiment, the process for preparation of polyolefins alloy of the invention is characterized in that in the hybrid catalyst, the second compound is a compound obtained from one or more ligands having a mono- or polycyclic structure containing conjugated π electrons coordinating with metal M.

Preferably the said second compound has the formula of :

Cp^{I}MR¹ₐR²_{b}R³_{c} (I)

or

Cp^{I}Cp^{II}MR¹ₐR²_{b} (II)

or

(Cp^{I}-Aₑ-Cp^{II})MR¹ₐR²_{b} (III)

in which M represents Ti, V, Zr or Hf; Cp^{I} and Cp^{II}, same or different, represent cyclopentadienyl groups, or substituted cyclopentadienyl groups; R¹, R² and R³ same or different, represent atoms of hydrogen, halogen, an alkyl or alkoxy group with 1 to 20 carbon atoms, aryl or substituted aryl with 6 to 20 carbon atoms, an acyloxy group with 1 to 20 carbon atoms, an allyl group, a substituent containing a silicon atom; A represents an alkyl bridge or one with structure selected from: 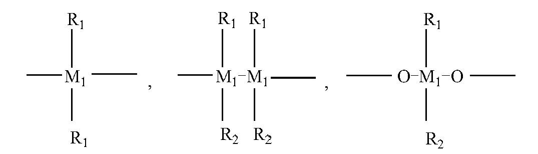 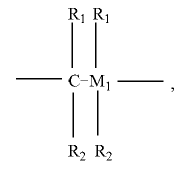 =BR₁, AlR₁, -O-, -S-, =SO, =SO₂, =NR₁, =PR₁, =P(O)R₁, in which M₁ represents Si, Ge, or Sn; R₁ and R₂, same or different, represent alkyl groups with 1-4 carbon atoms or aryl groups with 6-10 carbon atoms; a, b and c represent, independently, integers of from 0 to 4; e represents an integer of from 1 to 6.

Preferably the compounds having structure (I) is selected from the group consisting of (Me₅Cp)MMe₃, (Me₅Cp)M(OMe)₃, (Me₅Cp)MCl₃, (Cp)MCl₃, (Cp)MMe₃, (MeCp)MMe₃, (Me₃Cp)MMe₃, (Me₄Cp)MCl₃, (Ind)MBenz₃, (H₄Ind)MBenz₃, and (Cp)MBu₃.

Preferably the compounds having structure (II) is selected from the group consisting of (Cp)₂MMe₂, (Cp)₂MPh₂, (Cp)₂MEt₂, (Cp)₂MCl₂, (Cp)₂M(OMe)₂, (Cp)₂M(OMe)Cl, (MeCp)₂MCl₂, (Me₅Cp)₂MCl₂, (Me₅Cp)₂MMe₂, (Me₅Cp)₂MMeCl, (Cp)(Me₅Cp)MCl₂, (1-MeFlu)₂MCl₂, (BuCp)₂MCl₂, (Me₃Cp)₂MCl₂, (Me₄Cp)₂MCl₂, (Me₅Cp)₂M(OMe)₂, (Me₅Cp)₂M(OH)Cl, (Me₅Cp)₂M(OH)₂, (Me₅Cp)₂M(C₆H₅)₂, (Me₅Cp)₂M(CH₃)Cl, (EtMe₄Cp)MCl₂, [(C₆H₅)Me₄Cp]₂MCl₂, (Et₅Cp)₂MCl₂, (Me₅Cp)₂M(C₆H₅)Cl, (Ind)₂MCl₂, (Ind)₂MMe₂, (H₄Ind)₂MCl₂, (H₄Ind)₂MMe₂, {[Si(CH₃)₃]Cp}₂MCl₂, {[Si(CH₃)₃]₂Cp}₂MCl₂, and (Me₄Cp)(Me₅Cp)MCl₂.

Preferably the compounds having structure (III) is selected from the group consisting of C₂H₄(Ind)₂MCl₂, C₂H₄(Ind)₂MMe₂, C₂H₄(H₄Ind)₂MCl₂, C₂H₄(H₄Ind)₂MMe₂, Me₂Si(Me₄Cp)₂MCl₂, Me₂Si(Me₄Cp)₂MMe₂, Me₂SiCp₂MCl₂, Me₂SiCp₂MMe₂, Me₂Si(Me₄Cp)₂MMeOMe, Me₂Si(Flu)₂MCl₂, Me₂Si(2-Et-5-iPrCp)₂MCl₂, Me₂Si(H₄Ind)₂MCl₂, Me₂Si(H₄Flu)₂MCl₂, Me₂SiCH₂(Ind)₂MCl₂, Me₂Si(2-Me-H₄Ind)₂MCl₂, Me₂Si(2-MeInd)₂MCl₂, Me₂Si(2-Et-5-iPr-Cp)₂MCl₂, Me₂Si(2-Me-5-Et-Cp)₂MCl₂, Me₂Si(2-Me-5-Me-Cp)₂MCl₂, Me₂Si(1-Me-7-benzoindenyl)₂ZrCl₂, Me₂Si(2-Me-4,5-benzoindenyl)₂MCl₂, Me₂Si(4,5-benzoindenyl)₂MCl₂, Me₂Si(2-EtInd)₂MCl₂, Me₂Si(2-iPr-Ind)₂MCl₂, Me₂Si(2-t-butyl-Ind)₂MCl₂, Me₂Si(3-t-butyl-5-MeCp)₂MCl₂, Me₂Si(3-t-butyl-5-MeCp)₂MMe₂, Me₂Si(2-MeInd)₂MCl₂, C₂H₄(2-Me-4,5-benzoindenyl)₂MCl₂, Me₂C(Flu)CpMCl₂, Ph₂Si(Ind)₂MCl₂, Ph(Me)Si(Ind)₂MCl₂, C₂H₄(H₄Ind)M(NMe₂)OMe, isopropylidene-(3-t-butyl-Cp)(Flu)MCl₂, Me₂C(Me₄Cp)(MeCp)MCl₂, MeSi(Ind)₂MCl₂, Me₂Si(Ind)₂MMe₂, Me₂Si(Me₄Cp)₂MCl(OEt), C₂H₄(Ind)₂M(NMe₂)₂, C₂H₄(Me₄Cp)₂MCl₂ C₂H₄(Ind)₂MCl₂, Me₂Si(3-Me-Ind)₂MCl₂, C₂H₄(2-Me-Ind)₂MCl₂, C₂H₄(3-Me-Ind)₂MCl₂, C₂H₄(4,7-Me-H₄Ind)₂MCl₂, C₂H₄(5,6-Me₂-Ind)₂MCl₂, C₂H₄(2,4,7-Me₃-Ind)₂MCl₂, C₂H₄(3,4,7-Me₃-Ind)₂MCl₂, C₂H₄(2-Me-H₄Ind)₂MCl₂, C₂H₄(4,7-Me₂-H₄Ind)₂MCl₂, C₂H₄(2,4,7-Me₃-H₄Ind)₂MCl₂, Me₂Si(4,7-Me₂-Ind)₂MCl₂, Me₂Si(5,6-Me₂-Ind)₂MCl₂, and Me₂Si(2,4,7-Me₃-H₄Ind)₂MCl₂.

In a preferably embodiment of the process for preparation of polyolefins alloy of the invention, the present amount of the inactivator is in the range of from 0.5% to 2% based on the total weight of olefins monomers in the reactor. Preferably the temperature for the first polymerization reaction is in the range of from 40 °C to 75 °C , the temperature for the second polymerization reaction is in the range of from 75°C to 95.

Still preferably alkyl aluminum is further added as co-catalyst in the first polymerization reaction in an amount of ratio (W/W) of Al/Ti=1~1000, more preferably Al/Ti=50~ 200. In a preferably embodiment, the alkyl aluminum is trialkyl aluminum, or mixtures of trialkyl aluminum with halogenated or multi halogenated alkyl aluminum.

In a preferably embodiment of the process for preparation of polyolefins alloy of the invention, an external electron-donor is further added in the first polymerization reaction in an amount of the external electron-donor of 0 to 100 times by mole of that of element Ti in the hybrid catalyst. Preferably the external electron-donor is mono-esters, di-esters or diethers.

Preferably when the internal electron-donor in the hybrid catalyst is a carboxylate, the external electron-donor is a organosilicon compound having Si-O of the formula R₁R₂Si(OR)₂, in which R₁ and R₂ independently represent alkyl, cycloalkyl with from 1 to 18 carbon atoms, or aryl groups and R represents an alkyl radical with from 1 to 5 carbon atoms.

In a preferably embodiment of the process for preparation of polyolefins alloy of the invention, the process of the invention comprises the steps of:
charging spherical alcoholate MgCl₂ carrier with molar ratio of alcohol having 2 to 4 carbon atoms to MgCl₂ of 1:1 to 4:1 into a preparing bottle under the temperature of -20 °C to 10°C, incorporating the first compound having a transition metal M^{I} selected from titanium and vanadium without containing M^{I}-π bonds, wherein the transition metal M^{I} is in an amount of 0.1% to 20% by 5ml to 50ml per gram carrier;
stirring and increasing reaction temperature gradually, incorporating the internal electron-donor when the temperature reaches to 50°C~90°C; then increasing the temperature to 100°C~150°C, stirring and filtering, then incorporating 5ml to 50ml additional first compound, stirring and filtering at 100°C~150°C;
mixing a mixed solution of the aluminoxane and the second compound fully stirred at -25 °C to 25°C with a spherical Ziegler-Natta catalyzing component, wherein every gram of Ziegler-Natta catalyzing component corresponds to 1 × 10⁻⁶ mol ~5.6×10⁻⁴ mol of the second compound, the temperature for mixing is in the range of 0°C to 80°C, then washing by alkane solvent having 5 to 10 carbon atoms or aromatic solvents and drying to obtain the hybrid catalyst.

Preferably the spherical Ziegler-Natta catalyzing component is prepared by charging spherical alcoholate MgCl₂ carrier with molar ratio of alcohol having 2 to 4 carbon atoms to MgCl₂ of 1:1 to 4:1 into a preparing bottle, under the temperature of -20°C to 0°C, incorporating the first compound by 10 ml to 50 ml per gram carrier; incorporating the internal electron-donor when the temperature reaches to 50 °C ~ 90 °C ; then increasing the temperature to 100°C~150°C, further incorporating 5ml to 50ml of the first compound, stirring at 100°C~150°C and filtering. Still preferably every gram of Ziegler-Natta catalyzing component corresponds to 2×10⁻⁵ mol ~ 1.0×10⁻⁴ mol of the second compound.

In other words, in the preparation of polyolfins monomers, the invention is to obtain a polyolefins alloy particles having excellent morphology, adjustable composition and uniform structure.

In the invention, a hybrid catalyst being comprised of Ziegler-Natta catalyzing component and metallocene catalyzing component is used.

Firstly, component I in the hybrid catalyst is activated under suitable conditions, at the same time an inactivator is added to inactivate the component II in the hybrid catalyst. Component I initiates homopolymerization or copolymerization of olefins. Spherical porous particulate polyolefins are obtained by bulk polymerization, slurry polymerization or gas-phase polymerization. Inactivated catalyst component II is uniformly dispersed in inner-surface of cells of polyolefins particle.

After that, above obtained component II dispersed in inner-surface of cells of polyolefins particle is reactivated by activator. Copolymerization of various olefins is initiated by component II. Olefins copolymer can be uniformly dispersed in cells of above obtained polyolefins particles by slurry polymerization or gas-phase polymerization.

In particular, the present invention provides a process for the preparation of polyolefins alloy, especially polyprepolyene alloy comprising:
1) adding a hybrid catalyst, one or more olefins monomers (especially propylene monomer) and inactivators into a reactor, allowing a slurry polymerization in an alkane solvent having from 5 to 10 carbon atoms or an aromatic solvent, or a bulk polymerization directly in olefins monomers, wherein the temperature for the reaction is in the range of 0°C to 80 °C, preferably 40 °C to 75°C;
   wherein the structure of the inactivator is CH₂=CH-B, wherein B is selected from the group consisting of phenyl, biphenyl, naphthyl, anthracenyl and phenanthrenyl substituted with alkyl or alkoxyl or not, such as styrene, 4-methyl-styrene. The inactivator is used in an amount of 0.1% to 20% based on the total weight of olefins monomers in the reactor, preferably 0.5% to 20%.
   In this step, alkyl aluminum can be further added as co-catalyst in an amount of weight ratio of Al/Ti=1~1000, more preferably Al/Ti=50~200. The alkyl aluminum can be trialkyl aluminum, such as triethyl aluminum, triisobutyl aluminum, tri-n-butyl aluminum, tri-n-hexyl aluminum, tri-n-octyl aluminum; or mixtures of trialkyl aluminum with halogenated or multi-halogenated alkyl aluminum, such as mixtures with AlEt₂Cl or Al₂Et₃Cl₃.
   External electron-donor can be further added to control the isotacticity of the polymer. The external electron-donor is added in an amount of 0 to 100 times by mole of the amount of Ti element. The said external electron-donor can be same or different from the internal electron-donor. Preferably when the internal electron-donor in the hybrid catalyst is a carboxylate, the external electron-donor is a organosilicon compound having Si-O of the formula R₁R₂Si(OR)₂, in which R₁ and R₂ independently are alkyl, cycloalkyl with from 1 to 18 carbon atoms, or aryl groups and R is an alkyl radical with from 1 to 5 carbon atoms. In particular, the external electron-donor includes, for example, tetramethoxy silane, dimethyl-dimethoxy silane, tetraethoxy silane, triethoxy ethyl silane, dicyclopentoxy diethyl silane, diphenyl dimethoxy silane, diphenyl diethoxy silane.
2) stopping the addition of olefins monomers used in first polymerization reaction after the completion of the first polymerization reaction, then adding olefin monomers and activators needed in a second polymerization reaction; wherein the temperature for the second polymerization reaction is in the range of 60 °C to 120°C, preferably 75 °C to 95°C.
   Wherein the reaction monomers used in the second step of reaction are selected from one or more of olefins having from 2 to 12 carbon atoms, dienes, cyclic olefins and norbornene. The activator used in process of the invention is ethylene. And the amount of the activator ethylene is more than 1% based on the total weight of the hybrid catalyst. At the same time the ethylene can be conveniently used as comonomer in step 2.

The second step of the reaction can be accomplished by three ways that:
Firstly, after the completion of the step (1) polymerization, monomers for the second step reaction can be directly charged into the first polymer of step (1) for slurry polymerization; or
Secondly, the liquid part of the first polymerization production of step 1 is removed, then solvents such as alkane having from 5 to 10 carbon atoms or aromatics are incorporated, then reaction monomers are included for slurry polymerization; or
Thirdly, the reaction monomers for the second step are incorporated directly for gas-phase polymerization after the liquid part of the first polymerization product from step (1) is removed.
Alkyl aluminum or alkyl aluminoxane can be further incorporated as co-catalyst in step (2) in an amount of mole ratio of aluminum to metallocene element in hybrid catalyst of 0~16000.

The reaction of the invention can be carried out in a reactor, preferably in a two-stage reactor in series. In the process of the invention, in step 1 propylene homopolymer with high isotacticity or olefins copolymer having a copolymer level of less than 10% can be obtained; in step 2 random copolymer of olefins, such as ethylene/α-olefin copolymer can be obtained, wherein the amount of ethylene in the copolymer is 20 to 90% by weight; olefins copolymer obtained in step 2 is 3% to 80% by weight based on the total weight of polymer obtained from both step 1 and step 2.

The hybrid catalyst of the invention consisting mainly of Ziegler-Natta catalyzing component and metallocene catalyzing component, by weight percentage, comprises:
Component I: a compound having a transition metal M^{I} selected from titanium and vanadium without containing M^{I}-π bonds, wherein the transition metal M^{I} is in an amount of 0.1% to 20%;
Component II: a second compound having a transition metal M selected from Ti, Zr, V or Hf containing at least one M-π bond, wherein the transition metal **M** is in an amount of 0.05% to 2%;
Component III: a magnesium halide, wherein the amount of metal magnesium is in the range of from 5% to 20%
Component IV: an aluminoxane, wherein metal Al is in an amount of 0.1% to 20%;
Component V: an internal electron-donor of 1% to 30%.

In the component I of the hybrid catalyst, the compound of transition metal M^{I} is halides of Ti, halo-alcoholates of Ti, VCl₃, VCl₄, VOCl₃ or halo-alcoholates of V, more preferably the compound of Ti is TiCl₄, TiCl₃ or halo-alcoholates of formula Ti(OR^{I})*ₘ*X*ₙ*, in which R^{I} is a alkyl group or alkoxy with 1-12 carbon atoms, X is a halogen, m, n=0~ 4, and m+n is valency of the Ti.

In component II of the hybrid catalyst, the compound of transition metal M is a compound obtained from one or more ligands having a mono- or polycyclic structure containing conjugated π electrons coordinating with metal M. The compound of Ti, Zr, V or Hf has the formula of :

Cp^{I}MR¹ₐR²_{b}R³_{c} (I)

or

Cp^{I}Cp^{II}MR¹ₐR²_{b} (II)

or

(Cp^{I}-Aₑ-Cp^{II})MR¹ₐR²_{b} (III)

in which M is Ti, V, Zr or Hf; Cp^{I} and Cp^{II}, same or different, are cyclopentadienyl groups, or substituted cyclopentadienyl groups; R¹, R² and R³ same or different, are atoms of hydrogen, halogen, an alkyl or alkoxy group with 1 to 20 carbon atoms, aryl or substituted aryl with 6 to 20 carbon atoms, an acyloxy group with 1 to 20 carbon atoms, an allyl group, a substituent containing a silicon atom; A is an alkyl bridge or one with structure selected from: 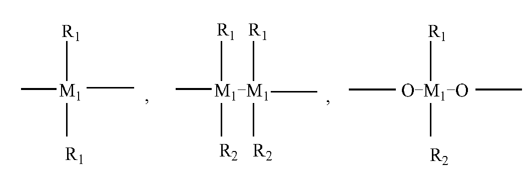 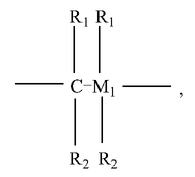 = BR₁, AlR₁, -Ge-, -Sn-, -O-, -S-, =SO, =SO₂, =NR₁, =PR₁, =P(O)R₁, in which M₁ is Si, Ge, or Sn; R₁ and R₂, same or different, are alkyl groups with 1-4 carbon atoms or aryl groups with 6-10 carbon atoms; a, b and c are, independently, integers of from 0 to 4; e is an integer of from 1 to 6.

Preferably the compounds having structure (I) is (Me₅Cp)MMe₃, (Me₅Cp)M(OMe)₃, (Me₅Cp)MCl₃, (Cp)MCl₃, (Cp)MMe₃, (MeCp)MMe₃, (Me₃Cp)MMe₃, (Me₄Cp)MCl₃, (Ind)MBenz₃, (H₄Ind)MBenz₃, or (Cp)MBu₃.

Preferably the compounds having structure (II) is (Cp)₂MMe₂, (Cp)₂MPh₂, (Cp)₂MEt₂, (Cp)₂MCl₂, (Cp)₂M(OMe)₂, (Cp)₂M(OMe)Cl, (MeCp)₂MCl₂, (Me₅Cp)₂MCl₂, (Me₅Cp)₂MMe₂, (Me₅Cp)₂MMeCl, (Cp)(Me₅Cp)MCl₂, (1-MeFlu)₂MCl₂, (BuCp)₂MCl₂, (Me₃Cp)₂MCl₂, (Me₄Cp)₂MCl₂, (Me₅Cp)₂M(OMe)₂, (Me₅Cp)₂M(OH)Cl, (Me₅Cp)₂M(OH)₂, (Me₅Cp)₂M(C₆H₅)₂, (Me₅Cp)₂M(CH₃)Cl, (EtMe₄Cp)MCl₂, [(C₆H₅)Me₄Cp]₂MCl₂, (Et₅Cp)₂MCl₂, (Me₅Cp)₂M(C₆H₅)Cl, (Ind)₂MCl₂, (Ind)₂MMe₂, (H₄Ind)₂MCl₂, (H₄Ind)₂MMe₂, {[Si(CH₃)₃]Cp}₂MCl₂, {[Si(CH₃)₃]₂Cp}₂MCl₂, or (Me₄Cp)(Me₅Cp)MCl₂.

Preferably the compounds having structure (III) is C₂H₄(Ind)₂MCl₂, C₂H₄(Ind)₂MMe₂, C₂H₄(H₄Ind)₂MCl₂, C₂H₄(H₄Ind)₂MMe₂, Me₂Si(Me₄Cp)₂MCl₂, Me₂Si(Me₄Cp)₂MMe₂, Me₂SiCp₂MCl₂, Me₂SiCp₂MMe₂, Me₂Si(Me₄Cp)₂MMeOMe, Me₂Si(Flu)₂MCl₂, Me₂Si(2-Et-5-iPrCp)₂MCl₂, Me₂Si(H₄Ind)₂MCl₂, Me₂Si(H₄Flu)₂MCl₂, Me₂SiCH₂(Ind)₂MCl₂, Me₂Si(2-Me-H₄Ind)₂MCl₂, Me₂Si(2-Melnd)₂MCl₂, Me₂Si(2-Et-5-iPr-Cp)₂MCl₂, Me₂Si(2-Me-5-Et-Cp)₂MCl₂, Me₂Si(2-Me-5-Me-Cp)₂MCl₂, Me₂Si(1-Me-7-benzoindenyl)₂ZrCl₂, Me₂Si(2-Me-4,5-benzoindenyl)₂MCl₂, Me₂Si(4,5-benzoindenyl)₂MCl₂, Me₂Si(2-EtInd)₂MCl₂, Me₂Si(2-iPr-Ind)₂MCl₂, Me₂Si(2-t-butyl-Ind)₂MCl₂, Me₂Si(3-t-butyl-5-MeCp)₂MCl₂, Me₂Si(3-t-butyl-5-MeCp)₂MMe₂, Me₂Si(2-MeInd)₂MCl₂, C₂H₄(2-Me-4,5-benzoindenyl)₂MCl₂, Me₂C(Flu)CpMCl₂, Ph₂Si(Ind)₂MCl₂, Ph(Me)Si(Ind)₂MCl₂, C₂H₄(H₄Ind)M(NMe₂)OMe, isopropylidene-(3-t-butyl-Cp)(Flu)MCl₂, Me₂C(Me₄Cp)(MeCp)MCl₂, MeSi(Ind)₂MCl₂, Me₂Si(Ind)₂MMe₂, Me₂Si(Me₄Cp)₂MCl(OEt), C₂H₄(Ind)₂M(NMe₂)₂, C₂H₄(Me₄Cp)₂MCl₂, C₂H₄(Ind)₂MCl₂, Me₂Si(3-Me-Ind)₂MCl₂, C₂H₄(2-Me-Ind)₂MCl₂, C₂H₄(3-Me-Ind)₂MCl₂, C₂H₄(4,7-Me-H₄Ind)₂MCl₂, C₂H₄(5,6-Me₂-Ind)₂MCl₂, C₂H₄(2,4,7-Me₃-Ind)₂MCl₂, C₂H₄(3,4,7-Me₃-Ind)₂MCl₂, C₂H₄(2-Me-H₄Ind)₂MCl₂, C₂H₄(4,7-Me₂-H₄Ind)₂MCl₂, C₂H₄(2,4,7-Me₃-H₄Ind)₂MCl₂, Me₂Si(4,7-Me₂-Ind)₂MCl₂, Me₂Si(5,6-Me₂-Ind)₂MCl₂, or Me₂Si(2,4,7-Me₃-H₄Ind)₂MCl₂.

Abbreviations in above structures are as follows: Me=methyl, Et=ethyl, iPr=isopropyl, Bu=butyl, Ph=phenyl, Cp=cyclopentadienyl, Ind=indenyl, H₄Ind=4,5,6,7-tetrahydroindenyl, Flu= fluorine, Benz=benzyl, M=Ti, Zr or Hf, preferably Zr.

Component III in the hybrid catalyst is catalyst carrier, preferably MgCl₂.

In component IV of the hybrid catalyst, the aluminoxane is a linear or non-linear compound having 1 to 50 repeating units of -(R₄)AlO-, wherein R₄ is representative of alkyl or cycloalkyl having 1 to 12 carbon atoms, or aryl having 6 to 10 carbon atoms, preferably the aluminoxane is methyl aluminoxane.

In the component V of the hybrid catalyst, the internal electron-donor includes mono-esters, di-esters or diethers, more particular the internal electron-donor is diethyl succinate, dibutyl adipate, diethyl phthalate, diisobutyl phthalate, 2,2-diisobutyl-1,3-dimethoxypropane or 9,9-bis(methoxymethyl) fluorine.

The hybrid catalyst is prepared by two steps:

### (1) Preparation of spherical Ziegler-Natta catalyst

The above catalyst can be prepared according to processes disclosed in CN1110281A, CN1047302A, CN1091748A or US4399054, or prepared according to the following process:
Charging spherical alcoholate MgCl₂ carrier with molar ratio of alcohol to MgCl₂ of 1:1 to 4:1 into a preparing bottle (alcohol can be an alcohol having 2 to 4 carbon atoms), under the temperature of -20 °C to 10°C, preferable -20 °C to 0°C, incorporating the component I (especially TiCl₄ or TiCl₃) according to 5ml to 50 ml component I (TiCl₄ or TiCl₃) per gram carrier, preferably 10ml to 50 ml component I per gram carrier; Stirring and rising temperature gradually, incorporating the internal electron-donor when the temperature reaches to 50°C~90°C; then rising the temperature to 100°C~ 150°C, stirring and filtering, then incorporating 5ml to 50ml additional component I (TiCl₄ or TiCl₃), stirring and filtering at 100°C~150°C;
Spherical catalyst can be fully washed by alkane (pentane, hexane, heptane etc.) or not.

### (2) Preparation of the hybrid catalyst

A mixed solution of the component IV and component II fully stirred at -25°C to 25°C is mixed with a spherical Ziegler-Natta catalyzing component, wherein every gram of Ziegler-Natta catalyzing component corresponds to 1×10⁻⁶ mol ~ 5.6×10⁻⁴ mol of the component II, preferably 2×10⁻⁵ mol ~ 1.0×10⁻⁴ mol; the temperature for mixing is in the range of 0°C to 80°C, stirring and then filtering, then washing by alkane solvent having 5 to 10 carbon atoms or aromatic solvents and drying to obtain the hybrid catalyst.

The hybrid catalyst can further comprise an external electron-donor during catalyzing a polymerization according to requirement of the reaction. The components of the external electron-donor can be same or different from said internal electron-donor, and can be mono-esters, di-esters or diethers, also can be siloxane. Also alkyl aluminum or alkyl aluminoxane will be needed as co-catalyst.

In the invention, the Ziegler-Natta catalyzing component in the hybrid catalyst plays a role in the first step of olefins polymerization, then the metallocene catalyzing component is activated in the second step to play a role in ethylene homopolymerization or copolymerization. Polymers with excellent morphology can be obtained by the use of heterogeneous Ziegler-Natta catalyst, also molecular design can be also carried out by the use of features of metallocene catalyst according to specific application with adjusting the properties of the polymer alloy. Compared with the prior art, the prepared polymer particles have regular spherical shape, and copolymers are uniformly dispensed in cells of polymer particles, thus ensure that problems such as aggregation of the product, adhesion to reactor wall etc. will not occur during polymerization. The procedure of the polymerization is simple and easily to be industrialized.

### DEDAILED DESCRIPTION OF THE PREFERRED EMBODIMENTS

### EXAMPLES

### Example 1: Preparation of the hybrid catalyst A

100 ml TiCl₄ were added to a reaction system under nitrogen blanket into a 500ml flask equipped with a sintered filter at the bottom and a mechanical stirrer. And then the system was cooled to -20 °C. 5 g spherical carrier of MgCl₂·nEtOH was added for reaction for 1 hour. The system was then heated to 50 °C, then 0.7 g diisobutyl phthalate was added. System temperature was gradually raised to 120°C. The reaction was carried out for 2 hours then the system was filtered. Then 100 ml TiCl₄ were further added and the reaction was kept at 120°C for 2 hours. The product was washed by hexane at 60 °C to obtain component a. 0.03 g C₂H₄(Ind)₂ZrCl₂ and 0.02 mol methylaluminoxane (MAO) were added to component a after reacting at 20 °C for 2 hours, and the system was kept reaction for 2 hours at 20°C. The obtained product was fully washed by hexane, and then dried under vacuum at room temperature for 1 hour. The composition of the obtained hybrid catalyst A includes Ti 3.3 wt%, Zr 0.17 wt%, Al 6.3 wt%, Mg 12.4 wt%, and diisobutyl phthalate 10.2wt%.

### Example 2: Preparation of the hybrid catalyst B

100 ml TiCl₄ was added to a reaction system under nitrogen blanket into a 500ml flask equipped with a sintered filter at the bottom and a mechanical stirrer. And then the system was cooled to -20 °C, 5 g spherical carrier MgCl₂·nEtOH was added for reaction for 1 h. The system was heated to 60 °C, then 0.65g 9,9-bis(methoxymethyl)fluorene (BMF) was added. The system temperature was gradually raised to 120°C. The reaction was carried out for 2 hours then the system was filtered. Then 100 ml TiCl₄ were further added and the reaction was kept at 120°C for 2 hours. The product was washed by hexane at 60 °C to obtain component b. 0.1 g C₂H₄(Ind)₂ZrCl₂ and 0.05 mol methylaluminoxane (MAO) were added to component b after reacting at 20 °C for 2 hours, and the system was kept reaction for 2 hours at 20°C. The obtained product was fully washed by hexane, then dried under vacuum at room temperature for 1 hour. The composition of the obtained hybrid catalyst B includes Ti 2.8 wt%, Zr 0.83 wt%, Al 9.8 wt%, Mg 9.8 wt% and BMF 9.5 wt%.

### Example 3: Preparation of the hybrid catalyst C

100 ml TiCl₄ were added to a reaction system under nitrogen blanket into a 500ml flask equipped with a sintered filter at the bottom and a mechanical stirrer. And then the system was cooled to -20 °C, 5 g spherical carrier MgCl₂·nEtOH was added for reaction for 1 h. The system was heated to 60 °C, then 0.65g 9,9-bis(methoxymethyl)fluorene (BMF) was added. The system temperature was gradually raised to 120°C. The reaction was carried out for 2 hours then the system was filtered. Then 100 ml TiCl₄ were further added and the reaction was kept at 120 °C for 2 hours. The product was washed by hexane at 60 °C to obtain component c. 0.7 g Me₂Si(1-Me-7-benzoindenyl)₂ZrCl₂ and 0.03 mol methylaluminoxane (MAO) were added to component c after reacting at 20 °C for 2 hours, and the system was kept reaction for 2 hours at 20 °C. The obtained product was fully washed by hexane, then dried under vacuum at room temperature for 1 hour. The composition of the obtained hybrid catalyst C inckudes Ti 2.9 wt%, Zr 0.45 wt%, A1 8.1 wt%, Mg 11.3 and BMF 11.4 wt%.

### Example 4: Preparation of polyolefins alloy

### (1): Preparation of PP Homopolymer

1500g liquid propylene and 9.06g styrene were added to a 10L polymerization reaction vessel, 0.076g diphenyldimethoxysilane (DDS), 0.36g triethylaluminum (TEA) and 0.05g hybrid catalyst A were added sequentially at 30°C. The temperature was increased to 75 °C, the reaction time was 90 min. The obtained polypropylene was 742g.

### (2): Copolymerization of Ethylene and Propylene

Residual propylene in reaction vessel of step 1 was evacuated, and the temperature was decreased to 30 °C, a mixed gas of 100g ethylene and 50 g propylene was added, and the temperature was increased to 90 °C, reaction was kept for 30min to obtain 863g product finally. The structure and properties of the product are shown in table 1.

### Example 5: Preparation of polyolefins alloy

### (1): Preparation of PP Homopolymer

1500g liquid propylene and 36g styrene were added to a 10L polymerization reaction vessel, 0.42g triethylaluminum (TEA) and 0.05g hybrid catalyst B were added sequentially at 30°C. The temperature was increased to 75 °C, the reaction time was 90 min. The obtained polypropylene was 850g.

### (2): Copolymerization of Ethylene and Propylene

Residual propylene in reaction vessel of step 1 was evacuated at 40 °C, a mixed gas of 100g ethylene and 50 g propylene was added to the reaction vessel containing polypropylene obtained in step 1, and the temperature was increased to 90 °C, reaction was kept for 30min to obtain 992g product finally. The structure and properties of the product are shown in table 1.

### Example 6: Preparation of polyolefins alloy

### (1): Preparation of PP Homopolymer

1500g liquid propylene and 36g styrene were added to a 10L polymerization reaction vessel, 0.42g triethylaluminum (TEA) and 0.05g hybrid catalyst B were added sequentially at 30°C. The temperature was increased to 75 °C, the reaction time was 90 min. The obtained polypropylene was 850g.

### (2): Copolymerization of Ethylene and Propylene

Residual propylene in reaction vessel of step 1 was evacuated, and the temperature was decreased to 30 °C, a mixed gas of 75g ethylene and 100 g propylene was added, and the temperature was increased to 90 °C, reaction was kept for 30min to obtain 1010g product finally. The structure and properties of the product are shown in table 1.

### Example 7: Preparation of polyolefins alloy

### (1): Preparation of PP Homopolymer

1500g liquid propylene and 36g styrene were added to a 10L polymerization reaction vessel, 0.42g triethylaluminum (TEA), 0.15g methyl aluminoxane (MAO) and 0.05g hybrid catalyst B were added sequentially at 30°C. The temperature was increased to 75 °C, the reaction time was 90 min. The obtained polypropylene was 890 g.

### (2): Copolymerization of Ethylene and Propylene

Residual propylene in reaction vessel of step 1 was evacuated, and the temperature was decreased to 30°C, a mixed gas of 100g ethylene and 150 g propylene was added, and the temperature was increased to 90 °C, reaction was kept for 30min to obtain 1115g product finally. The structure and properties of the product are shown in table 1.

### Example 8: Preparation of polyolefins alloy

### (1): Preparation of PP Homopolymer

1500g liquid propylene and 23g styrene were added to a 10L polymerization reaction vessel, 0.076g diphenyldimethoxysilane (DDS), 0.42g triethylaluminum (TEA) and 0.05g hybrid catalyst C were added sequentially at 30°C. The temperature was increased to 75 °C, the reaction time was 90 min. The obtained polypropylene was 690g.

### (2): Copolymerization of Ethylene and Propylene

Residual propylene in reaction vessel of step 1 was evacuated, and the temperature was decreased to 30°C, a mixed gas of 100g ethylene and 100 g propylene was added, and the temperature was increased to 90 °C, reaction was kept for 30min to obtain 872g product finally. The structure and properties of the product are shown in table 1.

### Example 9: Preparation of polyolefins alloy

### (1): Preparation of PP Homopolymer

1500g liquid propylene was added to a 10L polymerization reaction vessel, 0.076g diphenyldimethoxysilane (DDS), 0.42g triethylaluminum (TEA) and 0.05g hybrid catalyst C were added sequentially at 30°C. The temperature was increased to 75 °C, the reaction time was 90 min. The obtained polypropylene was 1080g.

### (2): Copolymerization of Ethylene and Propylene

Residual propylene in reaction vessel of step 1 was evacuated, and the temperature was decreased to 30°C, a mixed gas of 100g ethylene and 100 g propylene was added, and the temperature was increased to 90 °C, reaction was kept for 30min to obtain 1278g product finally. The structure and properties of the product are shown in table 1.

### Example 10: Preparation of polyolefins alloy

### (1): Preparation of PP Homopolymer

1500g liquid propylene and 36g 4-methyl-styrene were added to a 10L polymerization reaction vessel, 0.42g triethylaluminum (TEA) and 0.05g hybrid catalyst B were added sequentially at 30°C. The temperature was increased to 75 °C, the reaction time was 90 min. The obtained polypropylene was 850g.

### (2): Copolymerization of Ethylene and Propylene

Residual propylene in reaction vessel of step 1 was evacuated, and the temperature was decreased to 30°C, a mixed gas of 150g ethylene and 260 g propylene was added, and the temperature was increased to 90 °C, reaction was kept for 90min to obtain 1190g product finally. The structure and properties of the product are shown in table 1.

### Example 11: Preparation of polyolefins alloy

### (1): Preparation of PP Homopolymer

1500g liquid propylene and 36g 4-methyl-styrene were added to a 10L polymerization reaction vessel, 0.42g triethylaluminum (TEA) and 0.05g hybrid catalyst B were added sequentially at 30°C. The temperature was increased to 75 °C, the reaction time was 90 min. The obtained polypropylene was 850g.

### (2): Copolymerization of Ethylene and Propylene

Residual propylene in reaction vessel of step 1 was evacuated, and the temperature was decreased to 30°C, a mixed gas of 300g ethylene and 500 g propylene was added, and the temperature was increased to 90 °C, reaction was kept for 150min to obtain 1560g product finally. The structure and properties of the product are shown in table 1.

### Example 12: Preparation of polyolefins alloy

### (1): Preparation of PP Homopolymer

1500g liquid propylene and 36g styrene were added to a 10L polymerization reaction vessel, 0.42g triethylaluminum (TEA) and 0.05g hybrid catalyst B were added sequentially at 30°C. The temperature was increased to 75 °C, the reaction time was 120 min. The obtained polypropylene was 1010g.

### (2): Copolymerization of Ethylene/1-butylene

Residual propylene in reaction vessel of step 1 was evacuated, and the temperature was decreased to 30°C, a mixed gas of 200g ethylene and 360 g 1-butylene was added, and the temperature was increased to 90 °C, reaction was kept for 90min to obtain 1500g product finally. The structure and properties of the product are shown in table 1.

### Example 13: Preparation of polyolefins alloy

### (1): Preparation of PP Homopolymer

3.5L anhydrous hexane was added to a 10L polymerization reaction vessel, 36g styrene, 0.81g triethylaluminum (TEA) and 0.05g hybrid catalyst B were added at 30°C.

Propylene gas was added to keep the pressure inside the vessel at 10 atm. The temperature was increased to 70 °C, the reaction time was 120 min. The obtained polypropylene was 300g.

### (2): Copolymerization of Ethylene /1-hexene

Residual propylene in reaction vessel of step 1 was evacuated, and the temperature was decreased to 30°C, 100g ethylene and 45 g 1-hexene were added, and the temperature was increased to 85 °C, reaction time was kept for 90min to obtain 336g product finally. The structure and properties of the product are shown in table 2.

### Example 14: Preparation of polyolefins alloy

### (1): Preparation of PP Homopolymer

3.5L anhydrous hexane was added to a 10L polymerization reaction vessel, 36g styrene, 0.81g triethylaluminum (TEA) and 0.05g hybrid catalyst B were added at 30°C. Propylene gas was added to keep the pressure inside the vessel at 10 atm. The temperature was increased to 70 °C, the reaction time was 120 min. The obtained polypropylene was 300g.

### (2): Copolymerization of Ethylene /1-hexene

Residual propylene in reaction vessel of step 1 was evacuated, and the temperature was decreased to 30 °C, 100g ethylene and 80 g 1-hexene were added, and the temperature was increased to 85 °C, reaction time was kept for 90min to obtain 356g product finally. The structure and properties of the product are shown in table 2.

### Example 15: Preparation of polyolefins alloy

### (1): Preparation of PP Homopolymer

3.5L anhydrous hexane was added to a 10L polymerization reaction vessel, 36g styrene, 0.81g triethylaluminum (TEA) and 0.05g hybrid catalyst B were added at 30 °C. Propylene gas was added to keep the pressure inside the vessel at 10 atm. The temperature was increased to 70 °C, the reaction time was 120 min. The obtained polypropylene was 300g.

### (2): Copolymerization of Ethylene /1-octene

Residual propylene in reaction vessel of step 1 was evacuated, and the temperature was decreased to 30 °C, 70g ethylene and 50 g 1- octene were added, and the temperature was increased to 85 °C, reaction time was kept for 90min to obtain 329g product finally. The structure and properties of the product are shown in table 2.

### Example 16: Preparation of polyolefins alloy

### (1): Preparation of PP Homopolymer

3.5L anhydrous hexane was added to a 10L polymerization reaction vessel, 36g styrene, 0.81g triethylaluminum (TEA) and 0.05g hybrid catalyst B were added at 30°C. Propylene gas was added to keep the pressure inside the vessel at 10 atm. The temperature was increased to 70 °C, the reaction time was 120 min. The obtained polypropylene was 300g.

### (2): Copolymerization of Ethylene /1-octene

Residual propylene in reaction vessel of step 1 was evacuated, and the temperature was decreased to 30°C, 100g ethylene and 100 g 1-octene were added, and the temperature was increased to 85 °C, reaction time was kept for 90min to obtain 387g product finally. The structure and properties of the product are shown in table 2.

### Example 17: Preparation of polyolefins alloy

### (1): Preparation of PP Homopolymer

3.5L anhydrous hexane was added to a 10L polymerization reaction vessel, 36g styrene, 0.81g triethylaluminum (TEA) and 0.05g hybrid catalyst B were added at 30°C. Propylene gas was added to keep the pressure inside the vessel at 10 atm. The temperature was increased to 70 °C, the reaction time was 120 min. The obtained polypropylene was 300g.

### (2): Copolymerization of Ethylene /1- octene

Residual propylene in reaction vessel of step 1 was evacuated, and the temperature was decreased to 30 °C, 100g ethylene, 100 g 1- octene and 0.50g methyl aluminoxane (MAO) were added, and the temperature was increased to 85 °C, reaction time was kept for 90min to obtain 412g product finally. The structure and properties of the product are shown in table 2.

**TABLE 1**

| Characteristics of the polyolefinsalloys of Examples 4-12 | | | | | | | | | | |
|---|---|---|---|---|---|---|---|---|---|---|
| Example | | 4 | 5 | 6 | 7 | 8 | 9 | 10 | 11 | 12 |
| EOR | % by weight | 14.0 | 14.3 | 15.8 | 20.2 | 20.9 | 15.5 | 28.6 | 45.5 | 32.7 |
| M.p. DSC^{a} | °C | 165 | 163 | 163 | 162 | 163 | 164 | 163 | 163 | 163 |
| M.p. DSC^{b} | °C | 118 | 116 | 107 | 106 | 109 | 112 | 107 | 105 | 107 |
| Melt index | g/10 min. | 59.5 | 27.2 | 24.4 | 7.98 | 7.39 | 7.18 | 4.32 | 0.403 | 2.57 |
| Impact strength at -30°C | J/m | 29.1 | 35.5 | 42.8 | 52.0 | 88.4 | 78.7 | 85.5 | 159 | 131 |
| Flexural modulus | MPa | 1059 | 989.4 | 923.6 | 887.0 | 1026 | 992.5 | 840.2 | 689.3 | 799.2 |

**TABLE 2**

| Characteristics of the polyolefinsalloys of Examples 13-17 | | | | | | |
|---|---|---|---|---|---|---|
| Example | | 13 | 14 | 15 | 16 | 17 |
| EOR^{c} | % by weight | 10.7 | 15.9 | 8.8 | 22.5 | 27.2 |
| M.p. DSC^{a} | °C | 163 | 163 | 163 | 162 | 162 |
| M.p. DSC^{b} | °C | 92.6 | 88.8 | 84.3 | - | - |
| Melt index | g/10 min. | 5.67 | 4.12 | 8.52 | 3.29 | 3.04 |
| Impact strength at -30°C | J/m | 114 | 148 | 127 | 229 | 251 |
| Flexural modulus | MPa | 1124 | 1209 | 1278 | 1002 | 988 |

| | | | | | | |
|---|---|---|---|---|---|---|
| a, b: M.p. DSC. correspond to melting-point of PP and melting-point of long-segment part of the semi-crystalline in the copolymer rubber phase respectively. EOR: a copolymer of ethylene /α-olefins formed in stage 2 | | | | | | |

## Claims

1. A process for preparation of polyolefins alloy, comprising the steps of:
1) adding hybrid catalyst, one or more olefins monomers and inactivators into a reactor, allowing a first polymerization reaction as a slurry polymerization in alkane solvent having 5 to 10 carbon atoms or aromatic solvent or as a bulk polymerization directly in olefins monomers, wherein temperature for the first polymerization reaction is in the range of 0°C to 80°C;
wherein the structure of the inactivator is CH₂=CH-B, wherein B is selected from the group consisting of phenyl, biphenyl, naphthyl, anthracenyl and phenanthrenyl substituted with alkyl or alkoxyl or not, the inactivator is used in an amount of 0.1 % to 20% based on the total weight of olefins monomers in the reactor;
2) stopping the addition of olefins monomers after the completion of the first polymerization reaction, then adding olefin monomers and activators needed in a second polymerization reaction; wherein the temperature for the second polymerization reaction is in the range of 60 °C to 120°C,
wherein the olefins monomers used in the first polymerization reaction and the second polymerization reaction are selected from one or more of olefins having 2 to 12 carbon atoms, dienes, cyclic olefins and norbornene.

2. The process for preparation of polyolefins alloy according to claim 1, wherein the activator is ethylene in an amount of more than 1% based on the total weight of the hybrid catalyst.

3. The process for preparation of polyolefins alloy according to claim 1 or 2, wherein the hybrid catalyst consisting mainly of Ziegler-Natta catalyzing component and metallocene catalyzing component, by weight percentage, comprises:
a first compound having a transition metal M^{I} selected from titanium and vanadium
without containing M^{I}-π bonds, wherein the transition metal M^{I} is in an amount of 0.1 % to 20%;
a second compound having a transition metal M selected from Ti, Zr, V or Hf containing at least one M-π bond, wherein the transition metal M is in an amount of 0.05% to 2%;
Magnesium halide, wherein the metal magnesium is in an amount of 5% to 20%
Aluminoxane, wherein the metal Al is in an amount of 0.1% to 20%; and internal electron-donor of 1% to 30%.

4. The process for preparation of polyolefins alloy according to claim 3, wherein the first compound in the hybrid catalyst includes halides of Ti, halo-alcoholates of Ti, VCl₃, VCl₄, VOCl₃ or halo-alcoholates of V.

5. The process for preparation of polyolefins alloy according to claim 4, wherein the halide of Ti is TiCl₄, TiCl₃ or halo-alcoholates of formula Ti(OR^{I})*ₘ*X*ₙ*, in which R^{I} represents a alkyl group or alkoxy with 1-12 carbon atoms, X represents a halogen, m, n=0~4, and (m+n) represents valency of the Ti.

6. The process for preparation of polyolefins alloy according to claim 3, wherein the Magnesium halide in the hybrid catalyst is MgCl₂.

7. The process for preparation of polyolefins alloy according to claim 3, wherein in the hybrid catalyst, aluminoxane is a linear or non-linear compound having 1 to 50 repeating units of -(R₄)AlO-, wherein R₄ represents alkyl or cycloalkyl having 1 to 12 carbon atoms, or aryl having 6 to 10 carbon atoms.

8. The process for preparation of polyolefins alloy according to claim 7, wherein the aluminoxane is methyl aluminoxane.

9. The process for preparation of polyolefins alloy according to claim 3, wherein in the hybrid catalyst, the internal electron-donor is mono-esters, di-esters or diethers.

10. The process for preparation of polyolefins alloy according to claim 3, wherein the internal electron-donor is selected from the group consisting of diethyl succinate, dibutyl adipate, diethyl phthalate, diisobutyl phthalate, 2,2-diisobutyl-1,3-dimethoxypropane and 9,9-bis(methoxymethyl) fluorine.

11. The process for preparation of polyolefins alloy according to claim 3, wherein in the hybrid catalyst, the second compound is a compound obtained from one or more ligands having a mono- or polycyclic structure containing conjugated π electrons coordinating with metal M.

12. The process for preparation of polyolefins alloy according to claim 11, wherein the second compound has the formula of:
Cp^{I}MR¹ₐR²_{b}R³_{c} (I)
or
Cp^{I}Cp^{II}MR¹ₐR²_{b} (II)
or
(Cp^{I}-Aₑ-Cp^{II})MR¹ₐR²_{b} (III)
in which M represents Ti, V, Zr or Hf; Cp^{I} and Cp^{II}, same or different, represent cyclopentadienyl groups, or substituted cyclopentadienyl groups; R¹, R² and R³ same or different, represent atoms of hydrogen, halogen, an alkyl or alkoxy group with 1-20 carbon atoms, aryl, or substituted aryl with 6-20 carbon atoms, an acyloxy group with 1-20 carbon atoms, an allyl group, a substituent containing a silicon atom; A represents an alkyl bridge or one with structure selected from: 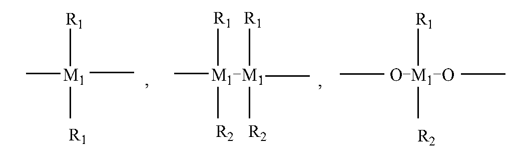 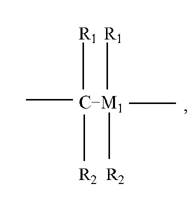 =BR₁, AlR₁, -Ge-, -Sn-, -O-, -S-, =SO, =SO₂, =NR₁, =PR₁, =P(O)R₁, in which M₁ represents Si, Ge, or Sn; R₁ and R₂, same or different, represent alkyl groups with 1-4 carbon atoms or aryl groups with 6-10 carbon atoms; a, b and c represent, independently, integers of from 0 to 4; e represents an integer of from 1 to 6.

13. The process for preparation of polyolefins alloy according to claim 12, wherein the compounds having structure (I) is selected from the group consisting of (Me₅Cp)MMe₃, (Me₅Cp)M(OMe)₃, (Me₅Cp)MCl₃, (Cp)MCl₃, (Cp)MMe₃, (MeCp)MMe₃, (Me₃Cp)MMe₃, (Me₄Cp)MCl₃, (Ind)MBenz₃, (H₄Ind)MBenz₃, and (Cp)MBu₃.

14. The process for preparation of polyolefins alloy according to claim 12, wherein the compounds having structure (II) is selected from the group consisting of (Cp)₂MMe₂, (Cp)₂MPh₂, (Cp)₂MEt₂, (Cp)₂MCl₂, (Cp)₂M(OMe)₂, (Cp)₂M(OMe)Cl, (MeCp)₂MCl₂, (Me₅Cp)₂MCl₂, (Me₅Cp)₂MMe₂, (Me₅Cp)₂MMeCl, (Cp)(Me₅Cp)MCl₂, (1-MeFlu)₂MCl₂, (BuCp)₂MCl₂, (Me₃Cp)₂MCl₂, (Me₄Cp)₂MCl₂, (Me₅Cp)₂M(OMe)₂, (Me₅Cp)₂M(OH)Cl, (Me₅Cp)₂M(OH)₂, (Me₅Cp)₂M(C₆H₅)₂, (Me₅Cp)₂M(CH₃)Cl, (EtMe₄Cp)MCl₂, [(C₆H₅)Me₄Cp]₂MCl₂, (Et₅Cp)₂MCl₂, (Me₅Cp)₂M(C₆H₅)Cl, (Ind)₂MCl₂, (Ind)₂MMe₂, (H₄Ind)₂MCl₂, (H₄Ind)₂MMe₂, {[Si(CH₃)₃]Cp}₂MCl₂, {[Si(CH₃)₃]₂Cp}₂MCl₂, and (Me₄Cp)(Me₅Cp)MCl₂.

15. The process for preparation of polyolefins alloy according to claim 12, wherein the compounds having structure (III) is selected from the group consisting of C₂H₄(Ind)₂MCl₂, C₂H₄(Ind)₂MMe₂, C₂H₄(H₄Ind)₂MCl₂, C₂H₄(H₄Ind)₂MMe₂, Me₂Si(Me₄Cp)₂MCl₂, Me₂Si(Me₄Cp)₂MMe₂, Me₂SiCp₂MCl₂, Me₂SiCp₂MMe₂, Me₂Si(Me₄Cp)₂MMeOMe, Me₂Si(Flu)₂MCl₂, Me₂Si(2-Et-5-iPrCp)₂MCl₂, Me₂Si(H₄Ind)₂MCl₂, Me₂Si(H₄Flu)₂MCl₂, Me₂SiCH₂(Ind)₂MCl₂, Me₂Si(2-Me-H₄Ind)₂MCl₂, Me₂Si(2-MeInd)₂MCl₂, Me₂Si(2-Et-5-iPr-Cp)₂MCl₂, Me₂Si(2-Me-5-Et-Cp)₂MCl₂, Me₂Si(2-Me-5-Me-Cp)₂MCl₂, Me₂Si(1-Me-7-benzoindenyl)₂ZrCl₂, Me₂Si(2-Me-4,5-benzoindenyl)₂MCl₂, Me₂Si(4,5-benzoindenyl)₂MCl₂, Me₂Si(2-EtInd)₂MCl₂, Me₂Si(2-iPr-Ind)₂MCl₂, Me₂Si(2-t-butyl-Ind)₂MCl₂, Me₂Si(3-t-butyl-5-MeCp)₂MCl₂, Me₂Si(3-t-butyl-5-MeCp)₂MMe₂, Me₂Si(2-MeInd)₂MCl₂, C₂H₄(2-Me-4,5-benzoindenyl)₂MCl₂, Me₂C(Flu)CpMCl₂, Ph₂Si(Ind)₂MCl₂, Ph(Me)Si(Ind)₂MCl₂, C₂H₄(H₄Ind)M(NMe₂)OMe, isopropylidene-(3-t-butyl-Cp)(Flu)MCl₂, Me₂C(Me₄Cp)(MeCp)MCl₂, MeSi(Ind)₂MCl₂, Me₂Si(Ind)₂MMe₂, Me₂Si(Me₄Cp)₂MCl(OEt), C₂H₄(Ind)₂M(NMe₂)₂, C₂H₄(Me₄Cp)₂MCl₂, C₂H₄(Ind)₂MCl₂, Me₂Si(3-Me-Ind)₂MCl₂, C₂H₄(2-Me-Ind)₂MCl₂, C₂H₄(3-Me-Ind)₂MCl₂, C₂H₄(4,7-Me-H₄Ind)₂MCl₂, C₂H₄(5,6-Me₂-Ind)₂MCl₂, C₂H₄(2,4,7-Me₃-Ind)₂MCl₂, C₂H₄(3,4,7-Me₃-Ind)₂MCl₂, C₂H₄(2-Me-H₄Ind)₂MCl₂, C₂H₄(4,7-Me₂-H₄Ind)₂MCl₂, C₂H₄(2,4,7-Me₃-H₄Ind)₂MCl₂, Me₂Si(4,7-Me₂-Ind)₂MCl₂, Me₂Si(5,6-Me₂-Ind)₂MCl₂, and Me₂Si(2,4,7-Me₃-H₄Ind)₂MCl₂.

16. The process for preparation of polyolefins alloy according to anyone of claims 1 to 15, wherein the inactivator is used in an amount of 0.5% to 2% based on the total weight of olefins monomers in the reactor.

17. The process for preparation of polyolefins alloy according to claim 16, wherein the temperature for the first polymerization reaction is in the range of 40°C to 75°C, the temperature for the second polymerization reaction is in the range of 75°C to 95.

18. The process for preparation of polyolefins alloy according to claim 17, wherein alkyl aluminum is further added as co-catalyst in the first polymerization reaction, in an amount of weight ratio of Al/Ti equal to 1 ~ 1000.

19. The process for preparation of polyolefins alloy according to claim 17, wherein alkyl aluminum is added in an amount of weight ratio of Al/Ti equal to 50~200.

20. The process for preparation of polyolefins alloy according to claim 18, wherein the alkyl aluminum is trialkyl aluminum, or mixtures of trialkyl aluminum with halogenated or multi halogenated alkyl aluminum.

21. The process for preparation of polyolefins alloy according to anyone of claims 1 to 20, wherein an external electron-donor is further added in the first polymerization reaction, the external electron-donor is added in an amount of 0 to 100 times by mole of that of element Ti in the hybrid catalyst.

22. The process for preparation of polyolefins alloy according to claim 21, wherein the external electron-donor is mono-esters, di-esters or diethers.

23. The process for preparation of polyolefins alloy according to claim 21, wherein when the internal electron-donor in the hybrid catalyst is a carboxylate, the external electron-donor is a organosilicon compound having Si-O of the formula R₁R₂Si(OR)₂ in which R₁ and R₂ independently are alkyl, cycloalkyl, or aryl groups with from 1 to 18 carbon atoms and R is an alkyl radical with from 1 to 5 carbon atoms.

24. A process for preparation of polyolefins alloy according to anyone claims 3 to 15, comprising the steps of:
Charging spherical MgCl₂ carrier with molar ratio of alcohol having 2 to 4 carbon atoms to MgCl₂ of 1:1 to 4:1 into a preparing bottle, under the temperature of -20°C to 10°C, incorporating the first compound having a transition metal M^{I} selected from titanium and vanadium without containing M^{I}-π bonds, wherein the transition metal M^{I} is in an amount of 0.1% to 20% by 5ml to 50ml per gram carrier;
Stirring and inceasing the temperature gradually, incorporating the internal electron-donor when the temperature reaches to 50°C~90°C; then increasing the temperature to 100°C~150°C, stirring and filtering, then incorporating 5ml to 50ml additional first compound, stirring and filtering at 100°C~150°C;
Mixing a mixed solution of the aluminoxane and the second compound fully stirred at -25 °C to 25°C with a spherical Ziegler-Natta catalyzing component, wherein every gram of Ziegler-Natta catalyzing component corresponds to 1×10⁻⁶ mol ~ 5.6×10⁻⁴ mol of the second compound, the temperature for mixing is in the range of 0°C to 80°C, then washing by alkane having 5 to 10 carbon atoms or aromatic solvents and drying to obtain the hybrid catalyst.

25. The process for preparation of polyolefins alloy according to claim 24, wherein the spherical Ziegler-Natta catalyst is prepared by charging spherical MgCl₂ carrier with molar ratio of alcohol having 2 to 4 carbon atoms to MgCl₂ of 1:1 to 4:1 into a preparing bottle, under the temperature of -20 °C to 0 °C, incorporating the first compound by 10 ml to 50 ml per gram carrier; incorporating the internal electron-donor when the temperature reaches to 50°C ~ 90°C; then increasing the temperature to 100°C~150°C, further incorporating 5ml to 50ml of the first compound, stirring at 100°C~150°C and filtering.

26. The process for preparation of polyolefins alloy according to claim 24 or 25, wherein every gram of Ziegler-Natta catalyzing component corresponds to 2×10⁻⁵ mol~ 1.0×10⁻⁴ mol of the second compound.
